# FASCICULE DE BREVET EUROPEEN

(11) **EP 0 663 708 B1**
(45) Date de publication et mention de la délivrance du brevet: **21.07.1999**
(21) Numéro de dépôt: 95400052.7
(22) Date de dépôt: 11.01.1995
(51) Int. Cl.: H01S 3/06, H01S 3/094, H04B 10/17

(54) **Amplificateur optique régulé**
Geregelter optischer Verstärker
Controlled optical amplifier

(30) Priorité: 13.01.1994 FR 9400321
(43) Date de publication de la demande: 19.07.1995
(73) Titulaire: ALCATEL, 75008 Paris (FR)
(72) Inventeur: Bayart, Dominique, F-92140 Clamart (FR); Clesca, Bertrand, F-75010 Paris (FR); Chesnoy, José, F-75014 Paris (FR)
(74) Mandataire: Bourely, Paul

(56) Documents cités:
- EP-A- 0 395 277
- EP-A- 0 517 503
- ELECTRONICS LETTERS., vol.30, no.17, 18 Août 1994, ENAGE GB pages 1407 - 1409, XP472066 D.BAYART ET AL '+.55 um fluoride-based EDFA with gain-flatness control for multiwavelength applications'
- IEEE PHOTONICS TECHNOLOGY LETTERS, vol.6, no.2, Février 1994, NEW YORK US pages 202 - 204, XP439750 Y.SATO ET AL. 'Noise figure monitoring of optical amplifiers via backward amplified spontaneous emission'

## Description

La présente invention concerne la régulation du gain d'un amplificateur optique à guide ou fibre dopée.

Le gain d'un tel amplificateur est classiquement commandé par l'intermédiaire d'un courant électrique. Ce courant alimente une source optique "de pompe" qui fournit une onde "de pompe" assurant l'excitation des éléments dopants de la fibre. Des amplificateurs connus comportent des boucles d'asservissement pour assurer une régulation de ce gain. Une telle boucle mesure la puissance d'une lumière rayonnée ou amplifiée par l'amplificateur, cette puissance étant représentative du gain et cette lumière pouvant être appelée "lumière de régulation". Puis elle compare cette puissance représentative à une puissance de consigne. Enfin, elle commande le courant d'alimentation de la source de pompe pour limiter ou annuler la différence entre ces deux puissances.

Dans un premier amplificateur connu la lumière de régulation est une lumière d'émission spontanée rayonnée transversalement par la fibre amplificatrice. Ce premier amplificateur connu est décrit dans le document EP-A 517 503 (NTT).

Il présente dans beaucoup d'applications industrielles les inconvénients que la lumière de régulation doit être filtrée et que la puissance de cette lumière mesurée par un détecteur est d'une part très faible, d'autre par très sensible à de petites variations de la situation du détecteur par rapport à la fibre, ce qui perturbe la régulation.

Dans un deuxième amplificateur connu la lumière de régulation est une lumière d'émission spontanée qui est guidée et amplifiée par la fibre amplificatrice et qui est prélevée en sortie de celle-ci. Cette lumière s'est donc propagée dans cette fibre dans le même sens que le signal à amplifier et peut donc être qualifiée de "codirectionnelle".

Ce deuxième amplificateur connu est décrit dans le document EP-A-395 277 (STC-PLC). Il présente l'inconvénient que la lumière de régulation doit être soigneusement filtrée pour que la puissance mesurée ne soit pas modifiée par le fait que le détecteur reçoit une partie de la lumière du signal amplifié. Ce filtrage soigné augmente le coût et l'encombrement de l'amplificateur.

Un but de la présente invention est d'assurer d'une manière plus simple la régulation du gain d'un amplificateur optique.

Dans ce but cette invention a pour objet un amplificateur optique régulé comportant un guide amplificateur et une boucle d'asservissement de la puissance d'une émission spontanée amplifiée par ce guide amplificateur cet amplificateur étant caractérisé par le fait que l'émission dont la puissance est asservie est une émission contradirectionnelle et guidée par ce guide amplificateur.

A l'aide des figures schématique ci-jointes, on va décrire plus particulièrement ci-après, à titre d'exemple non limitatif, comment la présente invention peut être mise en oeuvre. Lorsqu'un même élément est représenté sur plusieurs figures il y est désigné par le même signe de référence.

La figure 1 représente une vue d'une liaison optique comportant un amplificateur selon la présente invention.

La figure 2 représente une vue de l'amplificateur de la liaison de la figure 1.

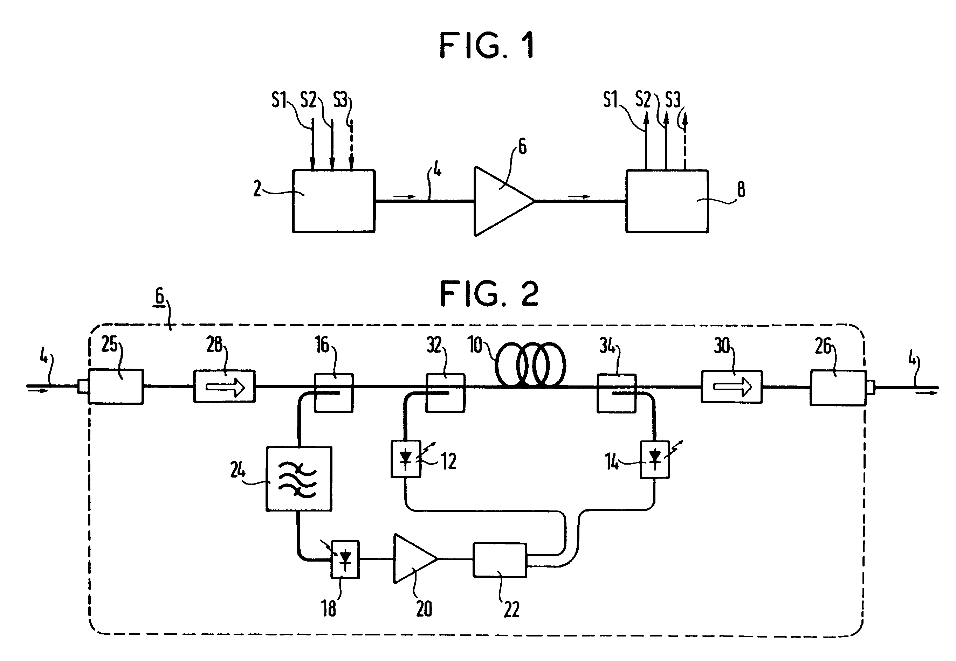

Conformément à la figure 1 et comme connu une liaison optique comporte les éléments suivants :
- Un ensemble émetteur 2. Cet ensemble reçoit simultanément plusieurs signaux à transmettre S1, S2, S3. Le nombre de ces signaux peut varier, le signal S3 pouvant être provisoirement absent. L'ensemble 2 émet en réponse simultanément plusieurs ondes porteuses de nature optique portant ces signaux dans plusieurs bandes spectrales distinctes. Ces bandes spectrales appartiennent à une pluralité de canaux de la liaison. Elles occupent certains de ces canaux. Une correspondance respective existe entre les signaux à transmettre, les ondes porteuses et les canaux occupés.
- Une ligne optique 4. Cette ligne reçoit les ondes porteuses et les guide ensemble sous la forme d'un multiplex spectral.
- Un amplificateur 6 est inseré dans la ligne 4 et amplifie le multiplex. Chaque onde porteuse reçoit ainsi une amplification. Le gain de cette amplification constitue un gain du canal correspondant à cette onde porteuse.
- Enfin un ensemble récepteur 8 reçoit les ondes porteuses en sortie de la ligne 4. Il restitue en réponse les signaux à transmettre.

L'amplificateur 6 comporte les éléments suivants :
- Un guide amplificateur 10 inséré en série dans la ligne 4. Ce guide est parcouru par le multiplex dans un sens direct. Il est par exemple constitué par une fibre optique dopée. Lorsqu'il est excité par une onde de pompe l'élément dopant réalise une amplification du multiplex. Il est typiquement constitué par des ions erbium Er⁺⁺⁺. Le gain de cette amplification dépend d'une caractéristique commandée de l'onde de pompe, cette caractéristique commandée étant typiquement la puissance de cette onde. Le guide amplificateur pourrait cependant aussi être constitué par une plaquette semiconductrice monocristalline. Il serait alors inséré au sein de cette plaquette entre deux couches de confinement de types de conductivité opposés. Une action de pompe permettant une amplification du multiplex serait alors constituée par le fait qu'un courant d'alimentation injecterait des porteurs de charges dans le guide amplificateur à partir de ces deux couches de confinement.
- Une source de pompe effectuant l'action de pompe, par exemple fournissant l'onde de pompe. Elle est typiquement dans ce cas constituée par deux diodes laser 12 et 14 émettant à une longueur d'onde de 1 480 nm et injectant deux ondes de pompe dans le guide amplificateur 10 par l'intermédiaire de deux multiplexeurs amont 32 et aval 34. Elle définit la caractéristique commandée de l'onde de pompe. Dans le cas d'un amplificateur optique semiconducteur la source de pompe serait une source électrique fournissant le courant d'alimentation de cet amplificateur.
- Des moyens de prélèvement de régulation. Ils prélevent, à partir du guide amplificateur 10, une lumière amplifiée par ce dernier. Cette lumière sera appelée ci-après "lumière de régulation". Ces moyens de prélèvement sont typiquement constitués par un coupleur optique 16.
- Enfin des moyens de commande de pompe 18, 20, 22. Ces moyens reçoivent la lumière de régulation. Ils commandent en réponse la source de pompe 12, 14 pour donner à la caractéristique commandée de l'onde de pompe une valeur assurant une amplification convenable du multiplex. Ils sont typiquement constitués par une diode photoréceptrice 18 pilotant un amplificateur électronique. Ce dernier fournit un courant d'alimentation aux deux diodes 12 et 14 constituant la source de pompe. Il est constitué par un préamplificateur 20 et un amplificateur de puissance 22. Ces moyens de commande de pompe réalisent ainsi un asservissement de la puissance de la lumière de régulation.

Dans un amplificateur optique connu le prélèvement de la lumière de régulation est effectué à la sortie du guide amplificateur et cette lumière est constituée par une fraction prédéterminée du multiplex amplifié et du bruit de sortie de ce guide. Les moyens de commande d'amplificateur commandent la puissance de l'onde de pompe de manière à maintenir constante la puissance de cette lumière de régulation. La puissance totale de sortie de l'amplificateur est ainsi maintenue constante.

Selon la présente invention les moyens de prélèvement de régulation 16 sont disposés en entrée du guide amplificateur 10. La lumière de régulation est alors constituée par une émission spontanée amplifiée dite "contradirectionnelle" parce qu'elle se propage dans un sens inverse opposé audit sens direct. Elle occupe spectralement une "bande de régulation". Un "gain de régulation" est constitué par un gain moyen présenté par le guide amplificateur dans la bande de régulation. L'asservissement de la puissance de la lumière de régulation constitue alors en même temps un asservissement du gain de régulation. Il permet ainsi d'une manière simple de réaliser un asservissement précis du gain de l'amplificateur dans diverses bandes spectrales pouvant inclure ou non la bande de régulation.

De préférence l'amplificateur 6 comporte en outre un filtre optique 24 interposé entre les moyens de prélèvement de régulation et les moyens de commande de pompe 18, 20, 22 pour limiter la bande de régulation. Le domaine spectral occupé par les canaux de la liaison s'étend par exemple entre 1 530 et 1 560 nm, et la bande de régulation s'étend par exemple entre 1 565 et 1 570 nm environ, en longueurs d'onde. Cette bande de régulation est choisie pour que la lumière de régulation de gain soit affectée aussi peu que possible par une variation de la puissance d'entrée.

Outre les éléments déjà mentionnés l'amplificateur 6 comporte deux bornes de connexion amont 25 et aval 26, et deux isolateurs optiques amont 28 et aval 30.

## Revendications

1. Amplificateur optique régulé comportant un guide amplificateur (10) et une boucle (16, 24, 18, 20, 22, 12, 32, 10) d'asservissement de la puissance d'une émission spontanée amplifiée par ce guide amplificateur, cet amplificateur étant caractérisé par le fait que l'émission dont la puissance est asservie est une émission contradirectionnelle et guidée par ce guide amplificateur.

2. Amplificateur selon la revendication 1, ledit amplificateur comportant :
- un guide amplificateur (10) pour recevoir et guider une lumière à amplifier se propageant d'une entrée à une sortie dudit guide amplificateur dans un sens direct, ledit guide amplificateur contenant des éléments amplificateurs propres à réaliser une amplification de ladite lumière en réponse à une action de pompe, un gain de cette amplification dépendant d'une caractéristique commandée de ladite action de pompe,
- une source de pompe (12, 14) effectuant ladite action de pompe,
- des moyens de prélèvement de régulation (16) prélevant, à partir dudit guide amplificateur (10), une lumière amplifiée par ce dernier et constituant une lumière de régulation,
- et des moyens de commande de pompe (18, 20, 22) recevant ladite lumière de régulation et commandant en réponse ladite source de pompe (12, 14) pour donner à ladite caractéristique commandée de l'action de pompe une valeur assurant une amplification souhaitée de ladite lumière à amplifier,
- ledit amplificateur (6) étant caractérisé par le fait que lesdits moyens de prélèvement de régulation (16) sont disposés en entrée dudit guide amplificateur (10), ladite lumière de régulation étant constituée par une émission spontanée amplifiée contradirectionnelle se propageant dans un sens inverse opposé audit sens direct.

3. Amplificateur selon la revendication 2 caractérisée par le fait qu'il comporte en outre un filtre optique (24) interposé entre lesdits moyens de prélèvement de régulation et lesdits moyens de commande de pompe (18, 20, 22) pour limiter une bande de régulation occupée dans le spectre par ladite lumière de régulation.

4. Amplificateur selon la revendication 3 caractérisé par le fait que ladite bande de régulation est choisie pour limiter des variations parasites de puissance présentées par ladite lumière de régulation en réponse à des variations de la puissance de ladite lumière à amplifier reçue par ledit amplificateur.

5. Amplificateur selon la revendication 4 dans lequel un domaine spectral occupé par ladite lumière à amplifier s'étend entre 1 530 et 1 560 nm, et ladite bande de régulation entre 1 565 et 1 570 nm environ, en longueurs d'onde, ledit guide amplificateur (10) étant une fibre optique dopée à l'erbium, ladite action de pompe étant un pompage optique.

## Patentansprüche

1. Geregelter optischer Verstärker, der einen Verstärkerleiter (10) und einen Regelkreis (16, 24, 18, 20, 22, 12, 32, 10) für die Leistung einer von diesem Verstärkerleiter verstärkten Spontanemission aufweist, **dadurch gekennzeichnet,** dass die Emission, deren Leistung geregelt wird, eine contradirektionale und von diesem Verstärkerleiter geleitete Emission ist.

2. Verstärker nach Anspruch 1, wobei der Verstärker aufweist:
- Einen Verstärkerleiter (10) zum Empfangen und Leiten eines zu verstärkenden Lichtes, das sich von einem Eingang zu einem Ausgang des Verstärkerleiters in einer direkten Richtung ausbreitet, wobei der Verstärkerleiter Verstärkerelemente enthält, die geeignet sind, ein Verstärken des Lichts in Antwort auf eine Pumpwirkung auszuführen, wobei eine Verstärkung dieses Verstärkens von einer gesteuerten Eigenschaft der Pumpwirkung abhängt,
- eine Pumpquelle (12, 14), die die Pumpwirkung bewirkt,
- Regelungsabnahmemittel (16), die vom Verstärkerleiter (10) aus ein Licht abnehmen, dass von diesem letzteren verstärkt wurde und ein Regelungslicht bildet,
- Pumpsteuerungsmittel (18, 20, 22), die das Regelungslicht empfangen und in Antwort die Pumpquelle (12, 14) steuern, um der gesteuerten Eigenschaft der Pumpwirkung einen Wert zu geben, der eine gewünschte Verstärkung des zu verstärkenden Lichts sicherstellt,
- wobei der Verstärker (6) dadurch gekennzeichnet ist, dass die Regelungsabnahmemittel (16) am Eingang des Verstärkerleitere (10) angeordnet sind, wobei das Regelungslicht aus einer contradirektionalen, verstärkten Spontanemission besteht, die sich in einer zur direkten Richtung entgegengesetzten, umgekehrten Richtung ausbreitet.

3. Verstärker nach Anspruch 2, dadurch gekennzeichnet, dass er außerdem ein optisches Filter (24) aufweist, das zwischen die Regelungsabnahmemittel und die Pumpsteuerungsmittel (18, 20, 22) gesetzt ist, um ein vom Regelungslicht in diesem Spektrum eingenommenes Regelungsband einzuschränken.

4. Verstärker nach Anspruch 3, dadurch gekennzeichnet, dass das Regelungsband so ausgewählt ist, dass störende Leistungsschwankungen begrenzt werden, die das Regelungslicht in Antwort auf Leistungsschwankungen des vom Verstärker empfangenen, zu verstärkenden Lichts aufweist.

5. Verstärker nach Anspruch 4, bei dem sich ein vom zu verstärkenden Licht eingenommener Spektralbereich sich in Wellenlängen zwischen 1 530 und 1 560 nm und das Regelungsband zwischen 1 565 und etwa 1 570 nm erstrecken, wobei der Verstärkerleiter (10) eine mit Erbium dotierte Lichtleitfaser ist, wobei die Pumpwirkung ein optisches Pumpen ist.

## Claims

1. A regulated optical amplifier including an amplifier waveguide (10) and a servo-control loop (16, 24, 18, 20, 22, 12, 32, 10) for servo-controlling the power of an amplified spontaneous emission that is amplified by the amplifier waveguide, said amplifier being characterized by the fact that the emission whose power is servo-controlled is a "reverse" emission and is guided by the amplifier waveguide.

2. An amplifier according to claim 1, said amplifier including:
an amplifier waveguide (10) for receiving and guiding light to be amplified propagating from an input to an output of said amplifier waveguide in a forward direction, said amplifier waveguide containing amplifier elements suitable for responding to pump action by applying amplification to said light, the gain of the amplification depending on a controlled characteristic of said pump action;
a pump source (12, 14) performing said pump action;
regulation tapping means (16) for tapping light from said amplifier waveguide (10), which light is amplified thereby and constitutes regulation light; and
pump drive means (18, 20, 22) receiving said regulation light and responding by driving said pump source (12, 14) so as to cause said controlled characteristic of the pump action to take a value that ensures desired amplification of said light to be amplified;
said amplifier (6) being characterized by the fact that said regulation tapping means (16) are disposed at the input of said amplifier waveguide (10), said regulation light being constituted by an amplified spontaneous reverse emission propagating in a backward direction that is opposite from said forward direction.

3. An amplifier according to claim 2, characterized by the fact that it further includes an optical filter (24) interposed between said regulation tapping means and said pump drive means (18, 20, 22) so as to limit a regulation band occupied in the spectrum by said regulation light.

4. An amplifier according to claim 3, characterized by the fact that said regulation band is chosen so as to limit parasitic variations in power that occur in said regulation light in response to variations in the power of said light to be amplified received by said amplifier.

5. An amplifier according to claim 4, in which a wavelength spectrum range occupied by said light to be amplified extends from 1,530 nm to 1.560 nm, and said regulation band extends from about 1,565 nm to about 1,570 nm, said amplifier waveguide (10) being an erbium-doped optical fiber, and said pump action being optical pumping.
